# EUROPEAN PATENT SPECIFICATION

(11) **EP 3 504 951 B1**
(45) Date of publication and mention of the grant of the patent: **19.08.2020**
(21) Application number: 18201275.7
(22) Date of filing: 18.10.2018
(51) Int. Cl.: A01D 34/64, A01D 34/74, A01D 43/063, A01D 34/71

(54) **RIDING GRASS MOWER**
AUFSITZRASENMÄHER
TONDEUSE AUTOPORTÉE

(30) Priority: 27.12.2017 JP 2017252349
(43) Date of publication of application: 03.07.2019
(73) Proprietor: Kubota Corporation, Osaka-shi, Osaka 556-8601 (JP)
(72) Inventor: TONOYA, Yoshihisa, SAKAI-SHI, OSAKA, 5900823 (JP); MATSUMOTO, Ryo, SAKAI-SHI, OSAKA, 5900823 (JP); TERAOKA, Tasuku, SAKAI-SHI, OSAKA, 5900823 (JP); YAMASHITA, Nobuyuki, SAKAI-SHI, OSAKA, 5900823 (JP); FUJII, Yuto, SAKAI-SHI, OSAKA, 5900823 (JP); TAKAOKA, Masaki, SAKAI-SHI, OSAKA, 5900823 (JP); MIHARA, Akihito, SAKAI-SHI, OSAKA, 5900823 (JP)
(74) Representative: Cabinet Beau de Loménie

(56) References cited:
- EP-A1- 3 097 757
- DE-A1- 10 127 860
- JP-A- 2006 141 344
- JP-B2- 6 146 107
- US-A1- 2015 250 099

## Description

### BACKGROUND OF THE INVENTION

### 1. Field of the Invention

The present invention relates to a riding (sulky) grass mower. More particularly, the present invention relates to a riding grass mower having a mower device disposed under a traveling machine body, a rollover protection structure (ROPS) standing erect at a rear end portion of the traveling machine body, a grass collecting container detachably supported by the ROPS, and a plurality of hydraulic cylinders for effecting lifting up/down and posture changing of the grass collecting container.

This invention is applicable to a variety of grass mowers from large sized type to small sized type.

### 2. Description of the Related Art

Conventionally, with this type of riding grass mower, the grass collecting container is supported at a rear end portion of the traveling machine body to be lifted up/down and also operated for dumping/discharging cut grass clippings by means of a plurality of hydraulic cylinders (lift cylinder, dumping cylinder) (see e.g. JP 2002-101722 A, JP 6146107).

With the riding grass mower disclosed in JP 2002-101722 A, in order to lift up/down the grass collecting container and to effect a cut grass discharging operation, a plurality of hydraulic cylinders are mounted on the grass collecting container side. And, a hydraulic pump, acting as a pressure oil source for these hydraulic cylinders, and a control valve are disposed on the traveling machine body side. Therefore, in order to attach/detach the grass collecting container to/from the traveling machine body, it is necessary to provide a detachable coupler or the like in midway of piping which extends from the pressure oil source on the traveling machine body side to the hydraulic cylinders on the grass collecting container side.

Although not explicitly disclosed in JP 2002-101722 A, if a plurality of hydraulic cylinders are provided on the grass collecting container side, in accordance with the number of the respective hydraulic cylinders, there will be needed pipes for feeding and discharging, so that the detachable couplers will be provided for pipes as twice as the number of hydraulic cylinders.

When the grass collecting container is to be detached, it is necessary to effect connecting and disconnecting operations for all of the detaching couplers provided in the respective pipes, thus presenting significant troubles. Therefore, there remains room for improvement in this respect.

Namely, there is a need for a riding grass mower that allows attaching/detaching operation of a grass collecting container by simple operations, with reducing the number of attachments and detachments of pressure oil feeding/discharging pipes of hydraulic cylinders on the side of the grass collecting container.

### SUMMARY OF THE INVENTION

In view of the above, a riding grass mower is proposed:
A riding grass mower comprising:
a mower device disposed under a traveling machine body;
a rollover protection structure (ROPS) standing erect at a rear end portion of the traveling machine body;
a grass collecting container detachably supported by the ROPS; and
a plurality of hydraulic cylinders for effecting lifting up/down and posture changing of the grass collecting container;
wherein a pressure oil feeding/discharging passage extends from a pressure oil feeding source mounted on the traveling machine body side to the plurality of hydraulic cylinders;
in the pressure oil feeding/discharging passage, an electromagnetic valve is supported by the grass collecting container for feeding/discharging pressure oil to/from the plurality of hydraulic cylinders, and a coupler is provided between the pressure oil feeding source and the electromagnetic valve, the coupler being configured to connect/disconnect the pressure oil feeding/discharging passage.

With this arrangement, an electromagnetic valve for feeding/discharging pressure oil to/from the hydraulic cylinders provided on the side of the grass collecting container is supported by the grass collecting container which is detachable.

Therefore, by providing an attaching/detaching coupler capable of connecting/disconnecting the pressure oil feeding/discharging passage at a pipe portion provided between the pressure oil feeding source and the electromagnetic valve, the pressure oil discharging passage between the pressure oil feeding source and the electromagnetic valve can be provided with only two pipes for feeding and discharging respectively.

Namely, since feeding and discharging of pressure oil to/from the individual hydraulic cylinders are effected on the downstream side of the electromagnetic valve as viewed from the side of the pressure oil feeding source, the passage extending from the pressure oil feeding source to the electromagnetic valve can be provided with only two pipes capable of feeding/discharging an amount corresponding to a sum of pressure oil feeding and discharging amounts effected on the downstream side of the electromagnetic valve.

Therefore, the couplers for attaching/detaching can be configured to allow only attachment and detachment of these two pipes. Thus, there can be achieved an advantage of possibility to reduce the number of couplers used and the trouble of their attachment and detachment.

According to one preferred embodiment, the riding grass mower further comprises:
a mower lifting cylinder for supporting the mower device so as to lift the mower lifting cylinder up/down relative to the traveling machine body;
a mower lifting operational valve for feeding/discharging pressure oil to/from the mower lifting cylinder; and
an operational lever for operating the mower lifting operational valve and the electromagnetic valve;
wherein the operational lever is operable in two operational directions intersecting each other; and
wherein the operational lever is operably coupled with the mower lifting operational valve and the electromagnetic valve such that the mower lifting operational valve is operated in response to an operation of the operational lever in one direction of the two operational directions, and the electromagnetic valve is operated in response to an operation of the operational lever in the other direction of the two operational directions.

With this arrangement, a series of related operations, namely, a lifting up/down operation of the mower device, a lifting up/down operation and a posture changing operation of the grass collecting container can be effected by using single operational lever. Thus, it is possible to obtain a riding grass mower having superior operability.

According to another preferred embodiment, an operational position restricting mechanism is provided between the operational lever and a machine body fixing portion where the operational lever is provided, for restricting a pivotal operational direction and a pivotal operational range of the operational lever; and
wherein the operational position restricting mechanism includes:
a restricting plate defining a through hole having a size and a shape corresponding to the pivotal operational range of the operational lever; and
a restricting pin to be inserted into the through hole for restricting a movable range of the restricting plate;
wherein one of the restricting plate and the restricting pin is provided in the operational lever to be pivotable in unison with the operational lever; and
wherein the other of the restricting plate and the restricting pin is provided in the machine body fixing portion.

With this arrangement, by means of a combination of a restricting plate or a restricting pin attached to the operational lever and a restricting plate or a restricting pin provided in the machine body fixing portion, the mechanism for operational position restriction of the operational lever can be configured simple and compact easily.

Further and other features and advantages thereof will become apparent upon reading the following detailed description.

### BRIEF DESCRIPTION OF THE DRAWINGS

Fig. 1 is an overall side view of a riding grass mower according to one embodiment of the present invention,
Fig. 2 is an overall plan view of the riding grass mower,
Fig. 3 is a circuit diagram showing a hydraulic system,
Fig. 4 is a perspective view showing a hydraulic pipe portion,

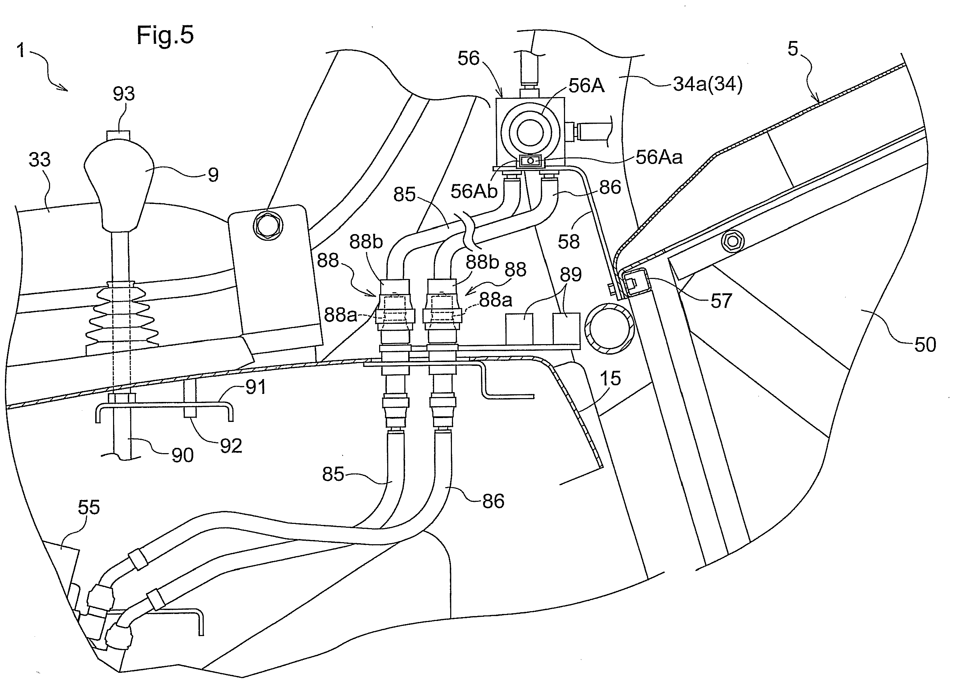

Fig. 5 is a perspective view showing an attachment arrangement of an electromagnetic valve,
Fig. 6 is a plan view showing guiding portions for a combined operational lever,
Fig. 7 is an explanatory view showing operational modes of the combined operational lever,
Fig. 8 is a side view showing a transporter device and an auxiliary stay, and
Fig. 9 is an exploded perspective view showing a mode of attachment of the transporter device and the auxiliary stay.

### DETAILED DESCRIPTION OF PREFERRED EMBODIMENT

One embodiment of a riding grass mower will be described hereinafter.

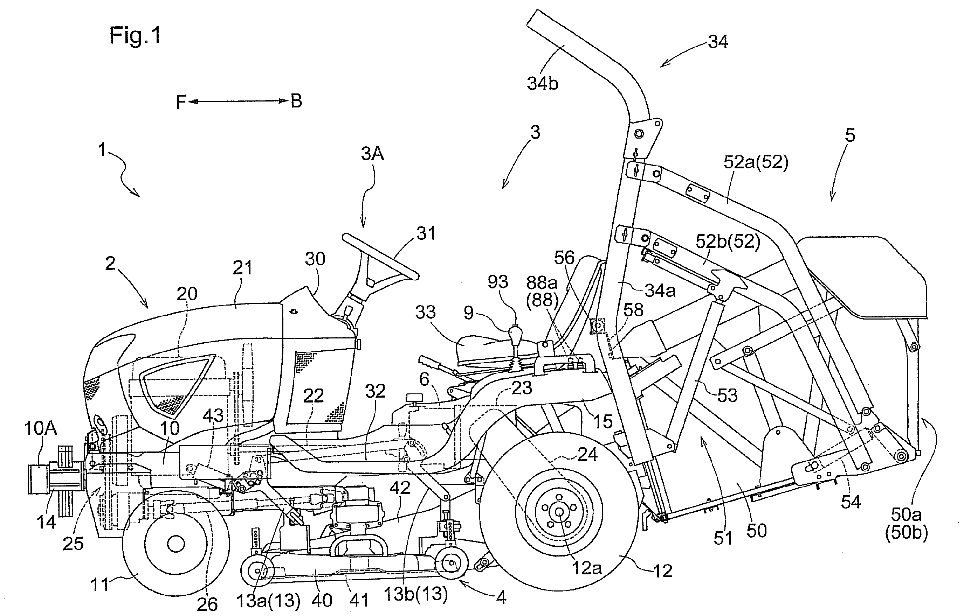

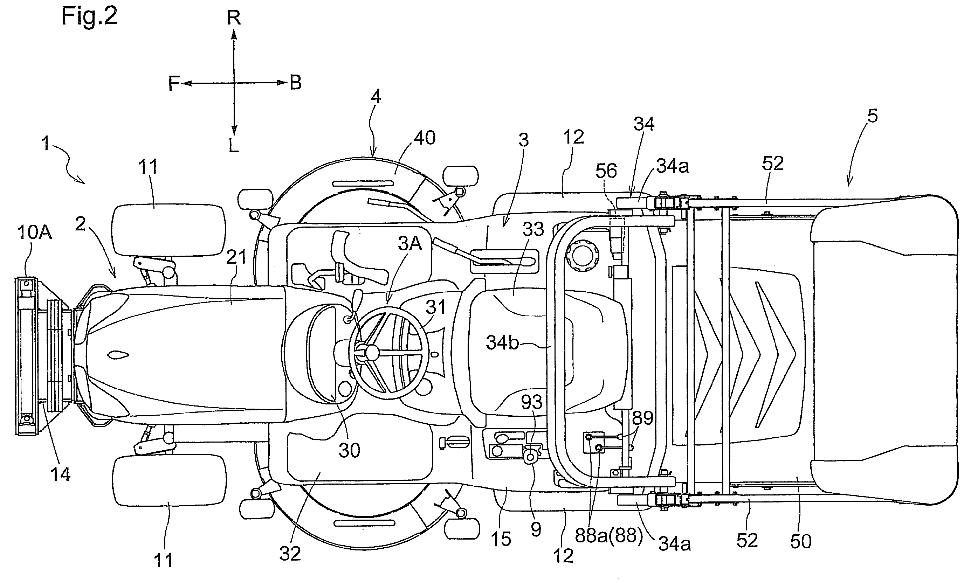

Unless indicated explicitly otherwise, it is understood that in the following discussion, the forward traveling direction of a riding grass mower at time of a work-traveling (arrow F in Fig. 1) represents the "front", the reverse traveling direction (arrow B in Fig. 1) represents the "rear". Relative to the "front" and "rear" direction, the right side represents the "right" (arrow R in Fig. 2) and the left side represents the "left" (arrow L in Fig. 2).

### [General Configuration of Riding Type Grass Mower]

Fig. 1 shows an overall side view of a riding type grass mower as an example of grass mower. Fig. 2 is an overall plan view of the riding grass mower. In the riding type grass mower, on a front side of a machine body frame 10 of a traveling machine body 1, there are provided a pair of right and left steerable front wheels 11, 11; and on a rear side thereof, there are provided a pair of right and left drivable rear wheels 12, 12, so that the machine can be self-propelled.

Beneath the machine body frame 10 and between the front wheels 11 and the rear wheels 12 in the front/rear direction, a rear discharge type mower device 4 is suspended to be liftable up/down. On a rear side of the traveling machine body 1, there is provided a grass collecting device 5 for accommodating cut grass clippings cut by the mower device 4.

As shown in Fig. 1 and Fig. 2, on the machine body frame 10 of the traveling machine body 1, an engine section 2 is provided at its front portion and a riding driving section 3 is provided on the rear side of the engine section 2.

At the engine section 2, an engine 20 is mounted on the machine body frame 10 as being accommodated within an engine hood 21. Power taken from the rear side of the engine 20 is inputted via a main transmission shaft 22 to a hydrostatic stepless speed changer device 6 disposed at a rear positon; and an output from this hydrostatic stepless speed changer device 6 is transmitted, through a transmission case 23 accommodating a gear transmission mechanism 23A, to rear axles 12a supported by right and left rear axle cases 24 for driving the respective rear wheels 12.

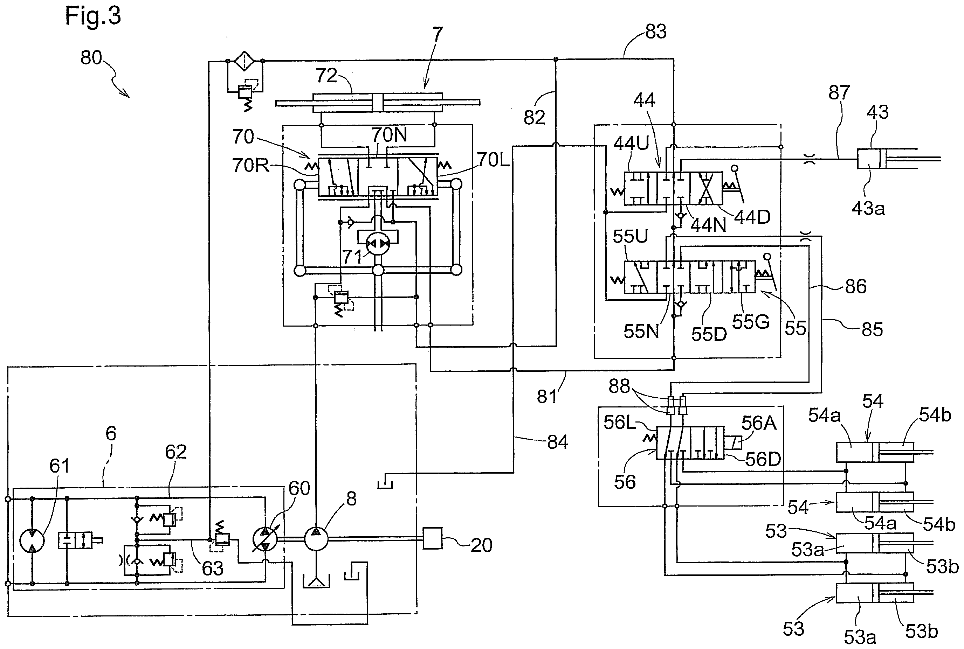

A steering operation of the front wheels 11 is effected by a power steering device 7 (see Fig. 3) operated in response to an operation of a steering wheel 31 provided at the riding driving section 3.

From the front side of the engine 20, power for a work can be taken off. More particularly, on the front side of the engine 20, there is provided a PTO (power takeoff) mechanism 25 in form of a belt transmission mechanism; and via a PTO shaft 26 of the PTO mechanism 25, power from the engine 20 is transmitted to the mower device 4.

At the riding driving section 3 on the rear side of the engine section 2, there are provided a control panel 30 disposed continuously from a rear side of the engine hood 21; a maneuvering section 3A including the steering wheel 31, etc. On the rear side of the maneuvering section 3A, there are provided a driver's seat 33 upwardly of an access step 32 disposed at the foot portion, and a rollover protection structure (ROPS) 34 mounted to stand erect at a rear portion of the driver's seat 33.

The ROPS 34 has a portal shape as seen in a front view thereof. To a pair of right and left ROPS bases (not shown) provided integrally at rear end portions of the machine body frame 10, there are connected and fixed lower sides of pillar-like leg portions 34a, 34a disposed on the right and left opposed sides. Upper end sides of the right and left pillar-like leg portions 34a, 34a are interconnected by a portal-shaped upper frame 34b, thus covering the upper side of the driver's seat 33.

At the front portion of the machine body frame 10, there is provided a guard frame 10A acting as a protective member for the machine body front portion. The guard frame 10A is provided with a balance weight attaching portion 14 to which a plurality of balance weights can be attached.

### [Mower Device]

The mower device 4 includes a housing 40 which is suspended from the machine body frame 10 to be liftable up/down relative thereto, via a link mechanism 13 having pairs of front links 13a and rear links 13b on the right and left opposed sides.

In the link mechanism 13, to an upper end portion of each front link 13a, a mower lift cylinder 43 is connected. In association with an expanding/contracting operation of the mower lift cylinder 43, a vertical height position of the housing 40 relative to the machine body frame 10 can be changed.

Inside the housing 40, there are mounted a pair of right and left rotary blades 41, 41. The respective rotary blades 41 are driven to rotate at an equal speed about vertical axes with rotational paths thereof being partially overlapped with each other, whereby grass or the like will be cut; and with a conveying wind generated in association with the rotation of the rotary blades 41, 41, cut grass clippings may be discharged to the rear side through a discharge opening formed at a rear portion of the housing 40.

### [Grass Collecting Device]

As shown in Fig. 1 and Fig. 2, the grass collecting device 5 includes a grass collecting container 50 for accommodating cut grass clippings; and a lift drive mechanism 51 for allowing lifting up/down operations of the grass collecting container 50 relative to the traveling machine body 1, as well as grass discharging operation thereof.

The grass collecting container 50 has, on its front end side, an inlet opening (not shown) for receiving cut grass clippings fed from the mower device 4 side via a conveying duct 42 and has, on its rear end side, a discharging opening 50a for discharging and an opening/closing lid 50b for covering this discharging opening 50a.

The lift drive mechanism 51 includes a lift link 52 which connects the grass collecting container 50 to the ROPS 34 provided on the rear side of the traveling machine body 1, a lift cylinder 53 (corresponding to one of a plurality of "hydraulic cylinders") for lifting up/down the lift link 52 relative to the ROPS 34, and a dump cylinder 54 (corresponding to one of "a plurality of hydraulic cylinders") for changing the posture of the grass collecting container 50 relative to the lift link 52, from a nearly horizontal collecting posture to a rearwardly downward rear-inclined posture so as to open/close the opening/closing lid 50b of the grass collecting container 50.

The lift link 52 includes a pair of right and left upper links 52a and a pair of right and left lower links 52b, with front end sides of the respective upper links 52b and lower links 52b being detachably connected to upper portions of the ROPS 34, and rear sides thereof being connected to lower portions adjacent the rear end of the grass collecting container 50. The upper end portion of the lift cylinder 53 in form of a hydraulic cylinder is connected to the lower links 52b, so that in response to an expanding/contracting movement of the lift cylinder 53, the lift link 52 is pivoted to elevate or lower the grass collecting container 50.

The dump cylinder 54 in form of a hydraulic cylinder is disposed downwardly of the rear end side of the grass collecting container 50. One end portion of the dump cylinder 54 is connected to a well-known dump operation mechanism (not shown) such that in response to an expanding/contacting movement of the dump cylinder 54, the grass collecting container 50 can be selectively operated into a discharging posture in which the grass collecting container 50 is turned over to be inclined rearwards, and a collecting posture in which the grass collecting container 50 is disposed nearly horizontal.

Each of the above-described lift cylinder 53 and the dump cylinder 54 are provided in one right/left pair, and included in a hydraulic circuit for the grass collecting device 5 such that each right/left pair of them is simultaneously operable.

### [Pressure Oil Feeding/Discharging Circuit]

The above-described hydrostatic stepless speed changer device 6, the power steering device 7, the lift cylinder 53, the dump cylinder 54 and the mower lift cylinder 43 receive feeding of pressure oil from a pressure oil feeding pump 8 (corresponding to a "pressure oil feeding source") driven by power of the engine 20. Next, a pressure oil feeding/discharging circuit 80 (see Fig. 3) to/from which the pressure oil from this pressure oil feeding pump 8 is fed/distanced will be described.

The hydrostatic stepless speed changer device 6 has a well-known configuration, in which a variable displacement type hydraulic pump 60, driven by power of the engine 20 like the pressure oil feeding pump 8, and a variable displacement type hydraulic motor 61 are interconnected by a closed circuit 62. Further, a charge circuit 63 is connected to the closed circuit 62 for replenishing an amount of pressure oil.

As shown in Fig. 3, pressure oil discharged from the pressure oil feeding pump 8 is fed to a steering control valve 70 of the power steering device 7.

The steering control valve 70 is selectively operable to one of three positions, namely, a neutral position 70N, a right turning position 70R and a left turning position 70L, in response to an operation on the steering wheel 31. In course thereof, a metering pump 71 sends pressure oil by an amount corresponding to an operational amount of the steering wheel 31 into a steering cylinder 72 of the power steering device 7, thus steering the front wheels 11 by an angle corresponding to the operational amount of the steering wheel 31.

When the steering wheel 31 is operated to the "straight traveling", the steering control valve 70 is located at the neutral position 70N. Under this state, an entire amount of oil fed from the pressure oil feeding pump 8 will flow into a first oil passage 81. In this first oil passage 81, on the downstream side thereof, there are connected the lift cylinder 53, the dump cylinder 54 and the mower lift cylinder 43, thus allowing for pressure oil feeding to the lift cylinder 53, the dump cylinder 54 and the mower lifting cylinder 43.

When the steering wheel 31 is operated to "right turning" or "left turning", the steering control valve 70 is located at the right turning position 70R or the left turning position 70L.

Under this state, a portion of the oil fed from the pressure oil feeding pump 8 will flow into the first oil passage 81, and the remaining portion thereof will flow into a second oil passage 82. Namely, the oil fed from the pressure oil feeding pump 8 is fed to both the first oil passage 81 and the second oil passage 82; and of this, the pressure oil flown into the second oil passage 82 is fed to the charge circuit 63 of the hydrostatic stepless speed changer device 6.

The first oil passage 81 incorporates a lifting operational valve 55 as a control valve for controlling operations of the hydraulic actuator, and on the downstream side thereof, a selection switching valve 56 (corresponding to "electromagnetic valve for pressure oil feeding/discharging") and a mower lifting operational valve 44 are provided.

The selection switching valve 56 is configured for selectively operating one of the lift cylinder 53 and the dump cylinder 54 as a control target, and is provided in form of a manually operable solenoid valve.

The mower lifting operational valve 44 is configured to switch over the mower lift cylinder 43 between a driven elevation state and a self-weight (gravity) lowering state, and is provided in form of a three-position switching valve.

The lifting operational valve 55 has a neutral position 55N, configured for a center bypass passage, and an elevating position 55U, a lowering position 55D and self-weight lowering position 55G.

When the selection switching valve 56 is selectively connected to the lift cylinder 53 and the mower lifting operational valve 44 is located at the neutral position 44N as shown in Fig. 3, flows of pressure oil at the respective operational positions of the above-described lifting operational valve 55 will take place as follows.

At the neutral position 55N, the oil flows downstream via a center bypass passage and past a center bypass passage of the mower lifting operational valve 44 to be fed into a third oil passage 83. As this third oil passage 83 is connected to the charge circuit 63 of the hydrostatic stepless speed changer device 6, the pressure oil fed to the third oil passage 83 will be used as charge oil.

When the lifting operational valve 55 is operated to the elevating position 55U, the pressure oil of the first oil passage 81 flows via a fifth oil passage 85 into an elevation chamber 53a of the lift cylinder 53, whereby the lift cylinder 53 is expanded to elevate the grass collecting container 50. The pressure oil present in a lowering chamber 53b of the lift cylinder 53 returns to the lifting operational valve 55 via a sixth oil passage 86, and then is fed via the center bypass passage to the third oil passage 83.

When the lifting operational valve 55 is operated to the lowering position 55D, the pressure oil of the first oil passage 81 flows via the sixth oil passage 86 to be fed into the lowering chamber 53b of the lift cylinder 53, whereby the lift cylinder 53 is contracted to lower the grass collecting container 50. The pressure oil present in the elevation chamber 53a of the lift cylinder 53 returns to the lifting operational valve 55 via the fifth oil passage 85, and then is fed via the center bypass passage to the third oil passage 83.

When the lift operational valve 55 is operated to the self-weight lowering position 55G, the pressure oil of the first oil passage 81 is fed via the center bypass passage to the third oil passage 83. And, the fifth oil passage 85 and the sixth oil passage 86 are connected to the fourth oil passage 84, so that the pressure oil in the elevation chamber 53a or the lowering chamber 53b of the lift cylinder 53 is now to be returned to the tank.

When the selection switching valve 56 is selectively connected to the dump cylinder 54 and the mower lifting operational valve 44 is located at the neutral position 44N, flows of pressure oil at the respective operational positions of the above-described lifting operational valve 55 will take place in a same way as the above-described case where the lift cylinder 53 is connected to an elevation chamber 54a and a lowering chamber 54b of the dump cylinder 54.

Referring next to flows of pressure oil at the operational positions of the mower lifting operational valve 44, at a neutral position 44N, the pressure oil of the first oil passage 81 is fed via the center bypass passage to the third oil passage 83. At an elevating position 44U, the pressure oil of the first oil passage 81 is fed via a seventh oil passage 87 to an elevation chamber 43a of the mower lift cylinder 43.

At a lowering position 44D, the pressure oil of the elevation chamber 43a of the mower lift cylinder 43 is returned under the self weight of the mower device 4 to the mower lifting operational valve 44 via the seventh oil passage 87, and then fed to the fourth oil passage 84 to flow into the tank.

As described above, the pressure oil fed to the steering control valve 70 of the power steering device 7 is not returned directly to the tank, irrespectively of presence/absence of an operation of the steering cylinder 72. Namely, the pressure oil from the power steering device 7 is fed to the first oil passage 81, which is configured for a feeding passage to the lift cylinder 53, the dump cylinder 54 and the mower lifting cylinder 43 each acting as a hydraulic actuator; and also fed to the second oil passage 82 which is connected to the charge circuit 63 of the hydrostatic stepless speed changer device 6.

For the pressure oil feeding passage to the lift cylinder 53 or the dump cylinder 54, too, the return oil from the lift cylinder 53 or the dump cylinder 54 is not entirely returned to the tank, but fed to the charge circuit 63 of the hydrostatic stepless speed changer device 6 via the third oil passage 83.

### [Attachment/Detachment Arrangement of Hydraulic Pipe]

In the pipe portion of the pressure oil feeding/discharging circuit 80 described above, in midway of the fifth oil passage 85 and the sixth oil passage 86 acting as a pressure oil feeding/discharging passage from the lifting operational valve 55 to the selection switching valve 56, there is provided an attaching/detaching coupler 88 capable of connecting this pressure oil feeding/discharging passage.

More particularly, in the pressure oil feeding/discharging passages, extending from the pressure oil feeding pump 8 mounted on the traveling machine body 1 side to the plurality of hydraulic cylinders (the lift cylinder 53, the dump cylinder 54) mounted on the side of the traveling machine body 1, the pressure oil feeding/discharging electromagnetic valve (selection switching valve 56) for the plurality of hydraulic cylinders is supported by the grass collecting container 50; and the coupler 88 is provided between the pressure oil feeding pump 8 and the electromagnetic valve (selection switching valve 56), whereby the coupler 88 is configured to connect/disconnect the pressure oil feeding/discharging passages. In other words, the coupler 88 is provided only between the pressure oil feeding pump 8 and the electromagnetic valve (selection switching valve 56) - that is, each coupler 88 is provided at a position of the pressure oil feeding/discharging passage remote from the lift cylinder 53 or the dump cylinder 54 across the selection switching valve 56; and the coupler 88 is not provided between the electromagnetic valve and the plurality of hydraulic cylinders.

The coupler 88 includes a male type coupler 88a provided at a rear portion of the traveling machine body 1 and a female type coupler 88b connected to the grass collecting container 50 side. The male type coupler 88a and the female type coupler 88b of the coupler 88 are configured to allow feeding/discharging of pressure oil under a connected state; and to stop feeding/discharging of pressure oil between the lifting operational valve 55 and the selection switching valve 56 under a disconnected state. Dust caps 89 are attached to a pair of the male type couplers 88a provided on the traveling machine body 1 side, respectively. When connection between the male coupler 88a and the female coupler 88b is released, the dust cap 89 can be fitted on the end portion of the male coupler 88a for closing it.

The selection switching valve 56 provided on the downstream side of the lifting operational valve 55 is attached to the side of the grass collecting container 50 which is detachable from the traveling machine body 1.

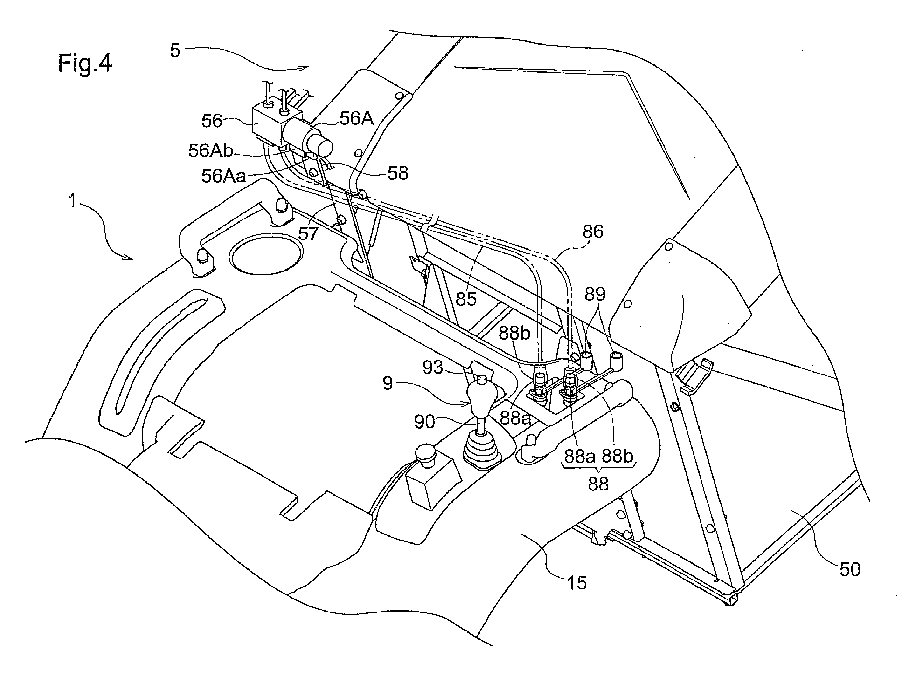

As shown in Fig. 4, the selection switching valve 56 is supported to an attaching stay 58 which extends from a front frame 57 of the grass collecting container 50, so that when the grass collecting container 50 is detached, the selection switching valve 56, together with the grass collecting container 50, can be detached from the traveling machine body 1.

To the upper face and the rear face of the selection switching valve 56, the feeding/discharging pipes to the lift cylinder 53 and the dump cylinder 54 are connected; and to the lower face thereof, there are connected the fifth oil passage 85 and the sixth oil passage 86 which extend toward the lifting operational valve 55. And, at the terminal ends of these fifth and sixth oil passages 85, 86, there are provided the female type couplers 88b which are detachably attachable to the male type couplers 88a on the traveling machine body 1 side.

At the terminal end of the selection switching valve 56 on the machine body inner side, a solenoid portion 56A is provided. This solenoid portion 56A includes a socket 56Ab into which an electric conduction plug 56Aa can be inserted along the right-left direction.

In operation, when the grass collecting container 50 is to be detached from the traveling machine body 1, the electric conduction plug 56Aa will be pulled out of the socket 56Ab, whereby the selection switching valve 56 will be disconnected from the power supply portion on the traveling machine body 1 side and detached from the traveling machine body 1 together with the grass collecting container 50.

The lift cylinder 53 provided in the grass collecting container 50 has its lower end side end portion connected to a lower portion of the ROPS 34 which is fixed to the traveling machine body 1. Thus, when the grass collecting container 50 is to be detached from the traveling machine body 1, the lower end portion of the lift cylinder 53 too will require release of its connection with the lower portion of the ROPS 34. Even with release of connection to the lower portion of the ROPS 34, however, the connected state of the hydraulic pipes to the lift cylinder 53 can be maintained without any trouble.

The dump cylinder 54 is not connected to the traveling machine body 1 side, thus requiring no attaching/detaching operations on the side of the grass collecting container 50.

When the grass collecting container 50 is to be attached to the traveling machine body 1, in the reverse procedure from the above, the lower end portion of the lift cylinder 53 will be connected to the lower portion of the ROPS 34; and the electric conduction plug 56Aa will be inserted into the socket 56Ab of the solenoid portion 56A of the selection switching valve 56, whereby the female couplers 88b of the fifth oil passage 85 and the sixth oil passage 86 will be connected to the male couplers 88a on the traveling machine body 1 side.

### [Arrangement of Operational Lever]

The expanding/contracting operations of the mower lift cylinder 43 and the expanding/contracting operations of the lift cylinder 53 and the dump cylinder 54 are carried out as follow.

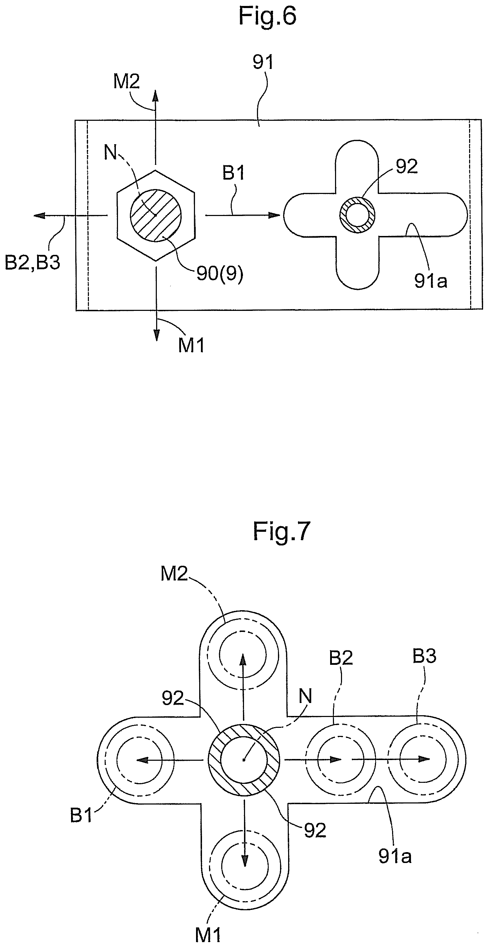

As shown in Fig. 2 and Fig. 6, at a left side portion of the driver's seat 33, there is provided a combined operational lever 9 (corresponding to "operational lever") acting as an operational tool for effecting the expanding and contracting operations of the mower lift cylinder 43 and the lift cylinder 53 and the dump cylinder 54.

In the combined operational lever 9, its rod body 90 extends through a rear wheel fender 15 in the vertical direction and is fixed to and supported by a machine body fixing portion (not shown) located lower than the rear wheel fender 15, so that the lever 9 is pivotable about a pivot in the front-rear direction and also in the right-left direction (corresponding to "two operational directions intersecting each other").

In the rod body 90 of the combined operational lever 9, at a portion thereof located downwardly of the rear wheel fender 15, a restricting plate 91 is fixed by welding. As the restricting plate 91 is fixedly welded to the rod body 90, the restricting plate 91 is pivotable together with the combined operational lever 9.

The restricting plate 91 defines a through hole 91a for setting a range corresponding to a pivotal operational range of the rod body 90 in association with a pivotal operation of the combined operational lever 9. On the side of the traveling machine body 1, a restricting pin 92 is attached vertically to be located within the through hole 91a. In the instant embodiment, an upper end of the restricting pin 92 is fixed to the lower face of the rear wheel fender 15; and from this lower face, the restricting pin 92 protrudes downwards.

With the restricting plate 91 in operation, a movement thereof is restricted when the through hole 91a comes into abutment against the restricting pin 92, whereas a free pivotal movement of the restricting plate 91 is allowed within the range free from such abutment against the restricting pin 92. Thus, by forming the through hole 91a in a cross shape as shown in Fig. 7, the combined operational lever 9 can be restricted to be pivotable within the predetermined range in the cross directions.

Namely, the combination of the restricting plate 91 and the restricting pin 92 constitutes an "operational position restricting mechanism" for restricting operational positions of the combined operational lever 9.

With the above-described combined operational lever 9, of the operable crossing directions, the intersecting position of the through hole 91a extending along the front-rear direction and the right-left direction in the restricting plate 91 forms the "neutral position N". The position where the combined operational lever 9 is operated to the right side (the restricting pin 92 comes into abutment against the left side groove end) is a "mower device elevating position M1"; and the position where the lever 9 is operated to the left side (the restricting pin 92 comes into abutment against the right side groove end) is a "mower device lowering position M2".

And, the position where the combined operational lever 9 is operated to the rear side (the restricting pin 92 comes into abutment against the front side groove end) is a "grass collecting container and opening/closing lid opening position B1"; and the position where the combined operational lever 9 is operated to the front side by one step (the restricting pin 92 is located in midway of the rear side groove) is a "grass collecting container and opening/closing lid closing position B2". Further, the position where the combined operational lever 9 is operated to the more front side than the front side than the "grass collecting container and opening/closing lid closing position B2" (the restricting pin 92 is located at the rear side groove end) is a "grass collecting container self-weight lowering position B3".

Namely, if the combined operational lever 9 is operated to the right side from the "neutral position N", a mechanism operably coupled with the right side movement of the combined operational lever 9 operates the mower lifting operational valve 44 to the elevating positon 44U and moves the restricting plate 91 to the right side, whereby the restricting pin 92 comes into abutment against the left end of the through hole 91a, thus restricting further rightward pivotal movement of the combined operational lever 9.

If the combined operational lever 9 is operated to the left side from the "neutral position N", a mechanism operably coupled with the left side movement of the combined operational lever 9 operates the mower lifting operational valve 44 to the lowering positon 44D and moves the restricting plate 91 to the left side, whereby the restricting pin 92 comes into abutment against the right end of the through hole 91a, thus restricting further leftward pivotal movement of the combined operational lever 9.

If the combined operational lever 9 is operated to the rear side from the "neutral positon N" to reach the "grass collecting container and opening/closing lid opening position B1", a mechanism operably coupled with the rear side movement of the combined operational lever 9 operates the lifting operational valve 55 to the elevating position 55U. Simultaneously, a signal detected by a sensor (not shown) for detecting an operational position of the combined operational lever 9 is detected by a controller of the selection switching valve 56; and if this selecting switching valve 56 is located at the dumping position 56D, the selecting switching valve 56 will be operated to the lifting position 56L for effecting pressure oil feeding/discharging to/from the lift cylinder 53.

And, when the lift cylinder 53 has been expanded by a predetermined amount, if a push button 93 provided at the grip portion of the combined operational lever 9 is pushed, the selection switching valve 56 is switched over to the dumping position 56D for effecting pressure oil feeding/discharging to/from the dump cylinder 54. With this, the grass collecting container 50 will be elevated to a predetermined height and then cut grass clippings will be discharged therefrom by opening the opening/closing lid 50b.

If the combined operational lever 9 is operated to the front side from the "neural position N" to reach the "grass collecting container and opening/closing lid closing position B2", the mechanism operably coupled with the front side movement of the combined operational lever 9 operates the lifting operational valve 55 to the lowering position 55D. Simultaneously, a signal detected by the sensor (not shown) for detecting an operational position of the combined operational lever 9 is detected by the controller of the selection switching valve 56; and if the selecting switching valve 56 is located at the dumping position 56D, the dumping cylinder 54 will be contracted to the lowering side to close the opening/closing lid 50b. After the opening/closing lid 50b is closed, if the push button 93 is again pressed, the selection switching valve 56 will be operated to the lifting position 56L for effecting pressure oil feeding/discharging to/from the lift cylinder 53. In association therewith, the lift cylinder 53 will be contracted by a predetermined amount, whereby the grass collecting container 50 will be located at a predetermined height capable of receiving cut grass clipping, with the opening/closing lid 50b thereof being closed.

If the combined operational lever 9 is operated further to the front side from the "grass collecting container and opening/closing lid closing position B2" to reach the "grass collecting container self-weight lowering position B3", the mechanism operably coupled with the front side movement of the combined operational lever 9 operates the lifting operational valve 55 to the self-weight lowering position 55G. Simultaneously, a signal detected by the sensor (not shown) for detecting an operational position of the combined operational lever 9 is detected by the controller of the selection switching valve 56; and if the selecting switching valve 56 is located at the dumping position 56D, the selecting switching valve 56 will be operated to the lifting position 56L capable of effecting pressure oil feeding/discharging to/from the lift cylinder 53.

Under this state, as the lifting operational valve 55 is located at the self-weight lowering position 55G, so that there is no feeding of pressure oil to the lift cylinder 53; and also, as discharging of the pressure oil from the lift cylinder 53 is allowed, the grass collecting container 50 will be rendered into a "floating" state.

### [Transporter device for Grass Collecting Device]

For the grass collecting device 5, there is provided a detachable transporter device 100 that allows transportation of this grass collecting device 5 detached from the traveling machine body 1 when the grass collecting device 5 is not in used.

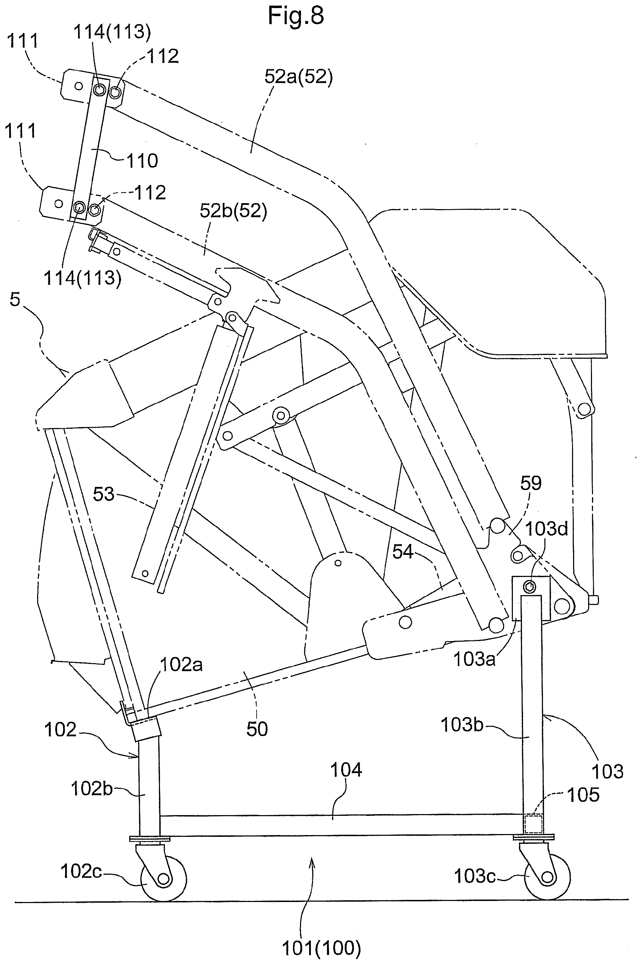

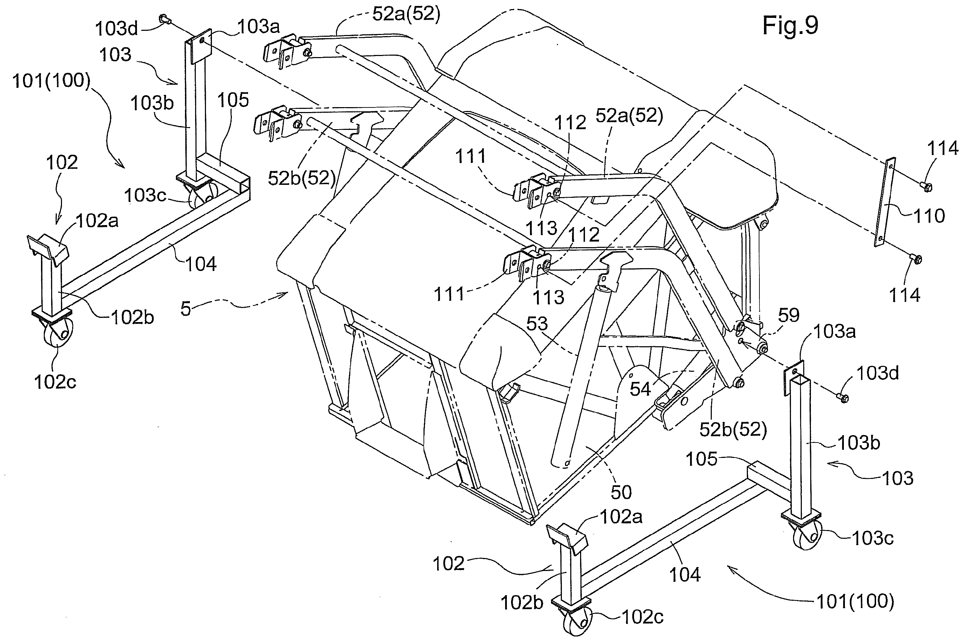

As shown in Fig. 8 and Fig. 9, this transporter device 100 includes a pair of right and left pedestal members 101 disposed on the right side and the left side of the grass collecting container 50 in distribution. These pedestal members 101 are arranged to be individually attachable to the grass collecting container 50 from the right and left outer sides thereof, so that the grass collecting device 5 can be transported with the right and left pedestal members 101 being kept attached to the grass collecting container 50.

Fig. 8 shows the arrangement of the left side pedestal member 101. The left side pedestal member 101 is formed in right-left symmetry with the right side pedestal member 101 as shown in Fig. 9.

Each pedestal member 101 includes a front supporting leg portion 102 for supporting the front end side of the grass collecting container 50 and a rear supporting leg portion 103 for supporting the rear end side of the grass collecting container 50. The front supporting leg portion 102 and the rear supporting leg portion 103 are assembled together with intermediate connecting members 104, 105.

The front supporting leg portion 102 includes a receiving table 102a on which a front end side bottom face of the grass collecting container 50 is to be placed, a supporting leg 102b for supporting the receiving table 102a from under, and a caster wheel 102c attached to the lower side of the supporting leg 102b.

In this front supporting leg portion 102, the receiving table 102a is formed with an L-shaped curve so as to come into abutment against the front end side bottom face and the front face of the grass collecting container 50 under a forwardly inclined posture.

At the rear end of the grass collecting container 50, a rear portion connecting member 59 is provided for connecting this rear end and a rear end lower portion of the lift link 52 together with the dump link 54. In the rear supporting leg portion 103, there are provided a connecting member 103a connectable via a connecting bolt 103d to the rear connecting member 59 from the lateral outer side thereof, a supporting leg 103b for supporting this connecting member 103a from under, and a caster wheel 103a attached to the lower side of the supporting leg 103b.

The rear end portion of the grass collecting container 50 is present at a position offset to the lateral outer side in the right-left direction than the left/right end portion of the front end portion of the grass collecting container 50. Therefore, in the positional relation between the receiving table 102a of the front supporting leg portion 102 and the connecting member 103a of the rear supporting leg portion 103 too, the connecting member 103a is present at a position offset to the lateral outer side than the receiving table 102a.

In this way, in order to interconnect the font supporting leg portion 102 and the rear supporting leg portion 103 which are positioned differently in the right-left direction also, a front-rear oriented intermediate connecting member 104 and a right-left oriented intermediate connecting member 105 together connect the front supporting leg portion 102 and the rear supporting leg portion 103 integrally with each other.

Therefore, by connecting the rear end portion of the grass collecting container 50 having its front end side supported to the front supporting leg portion 102 to the connecting member 103a via the connecting bolt 103d, the grass collecting container 50 will be supported in a stable manner by the pair of right and left pedestal members 101. With this, the grass collecting device 5 detached from the traveling machine body 1 can be transported by the transporter device 100.

Incidentally, the shapes and connection arrangements of the receiving table 102a of the front supporting leg portion 102 and the connecting member 103a of the rear supporting leg portion 103 can be modified as needed or appropriate.

In short, instead of such operation in which with setting a certain prepared mount or the like at a predetermined position, the traveling machine body 1 will be caused to travel in reverse into positional registry to mount the grass collecting container 50 thereon and then detached from the traveling machine body 1, the arrangement allows detachment of the right and left pedestal members 101 from the right and left lateral outer sides, respectively, relative to the grass collecting container 50 which is supported in suspension by the lift link 52.

With the above, the pedestal members 101 will be attached with lowering the grass collecting container 50 to an appropriate height; and then the lift cylinder 52 will be lowered until all of the caster wheels 102c, 103c of the transporter device 100 touch the ground surface; and then the grass collecting container 50 will be detached from the traveling machine body 1. With this, detachment operation of the grass collecting container 50 can be carried out easily by one person.

### [Auxiliary Stay]

When the grass collecting device 5 is to be detached from the traveling machine body 1, the lift link 52, having the upper link 52a and the lower link 52b, will be also detached from the ROPS 34 to which the front end side thereof was connected. Therefore, it is necessary to support a front end position of each of the upper link 52a and the lower link 52b.

Since the lower link 52b is connected to the upper end of the lift cylinder 53, if the lower portion of the lift cylinder 53 is fixed to a part of the grass collecting container 50 or to a part of the transporter device 100, its posture can be maintained. However, nothing will be left connected to the front end side of the upper link 52a, thus such posture will be unstable.

Then, in the instant embodiment, as shown in Fig. 8 and Fig. 9, front end vicinity portions of the upper link 52a and the lower link 52b are interconnected via an auxiliary stay 110. With this, the relative posture on the front end side portions of the upper link 52a and the lower link 52b can be maintained stably under a constant state, so that when the position of the lower link 52b is fixed by fixing of the lift cylinder 53, the position of the upper link 52a will be fixed as well.

The above-described auxiliary stay 110 is provided between upper and lower connecting metal member 111, 111 for interconnecting the front end portions of the upper link 52a and the lower link 52b to the ROPS 34.

In the connecting metal members 111, 111, between connecting bolts 112, 112, which interconnect the front end portions of the upper link 52a and the lower link 52b, and the rear face of the ROPS 34, there are formed connecting holes 113, 113.

The auxiliary stay 110 interconnect the front end vicinity portions of the upper link 52a and the lower link 52b by inserting stopper bolts 114, 114 into the connecting holes 113, 113.

This auxiliary stay 110 is provided only on one side in the right-left direction of the lift link 52. However, since the upper links 52a of the right and left lift links 52 each other and the lower links 52b each other are interconnected via connecting rods, by means of this auxiliary stay 100 provided on one side in the right-left direction, the positions of the upper links 52a and the lower links 52b on the right and left opposed sides can be fixed.

### [Other Embodiments]

The arrangements of following other embodiments can be employed in any combination as desired.
(1) In the foregoing embodiment, the positions of the socket 56Ab and the electric conduction plug 56Aa for connection and disconnection of the electric system are made different from the position of the coupler 88 for effecting communication and non-communication of pressure oil. However, the invention is not limited thereto. For instance, the positions of the socket 56Ab and the electric conduction plug 56Aa may be same or nearly same as the position of the coupler 88 for effecting communication and non-communication of pressure oil, so as to allow connections and disconnections thereof to be effected by a simultaneous operation.
(2) In the foregoing embodiment, a single combined operational lever 9 is provided as an operational tool for lifting up/down the mower device 4 and also as an operational tool for lifting up/down and opening/closing operations of the grass collecting container 50. However, the invention is not limited thereto. For instance, the above operations may be carried out individually by separate operational tools.
(3) In the foregoing embodiment, as an operational position restricting mechanism, the restricting plate 91 is fixedly welded to the rod body 90 of the combined operational lever 9, and the restricting pin 92 is fixed to a machine body fixing portion on the traveling machine body 1 side. However, the invention is not limited thereto.

For instance, conversely from the above, the restricting plate 91 may be fixed to the fixing portion, and the restricting pin 92 may be fixedly welded to the rod body 90 of the combined operational lever 9.

## Claims

1. A riding grass mower comprising:
a mower device (4) disposed under a traveling machine body (1);
a rollover protection structure (ROPS) (34) standing erect at a rear end portion of the traveling machine body (1);
a grass collecting container (50) detachably supported by the ROPS (34); and
a plurality of hydraulic cylinders (53, 54) for effecting lifting up/down and posture changing of the grass collecting container (50);
wherein a pressure oil feeding/discharging passage extends from a pressure oil feeding source (8) mounted on the traveling machine body side to the plurality of hydraulic cylinders (53, 54); a coupler being configured to connect/disconnect the pressure oil feeding/discharging passage; **characterized in that**
in the pressure oil feeding/discharging passage, an electromagnetic valve (56) is supported by the grass collecting container (50) for feeding/discharging pressure oil to/from the plurality of hydraulic cylinders (53, 54), and the coupler (88) is provided between the pressure oil feeding source (8) and the electromagnetic valve (56).

2. The riding grass mower of claim 1, wherein:
the riding grass mower further comprises:
a mower lifting cylinder (43) for supporting the mower device (4) so as to lift the mower lifting cylinder (43) up/down relative to the traveling machine body (1);
a mower lifting operational valve (44) for feeding/discharging pressure oil to/from the mower lifting cylinder (43); and
an operational lever (9) for operating the mower lifting operational valve (44) and the electromagnetic valve (56);
wherein the operational lever (9) is operable in two operational directions intersecting each other; and
wherein the operational lever (9) is operably coupled with the mower lifting operational valve (44) and the electromagnetic valve (56) such that the mower lifting operational valve (44) is operated in response to an operation of the operational lever (9) in one direction of the two operational directions, and the electromagnetic valve (56) is operated in response to an operation of the operational lever (9) in the other direction of the two operational directions.

3. The riding grass mower of claim 2, wherein:
an operational position restricting mechanism is provided between the operational lever (9) and a machine body fixing portion where the operational lever (9) is provided, for restricting a pivotal operational direction and a pivotal operational range of the operational lever (9); and
wherein the operational position restricting mechanism includes:
a restricting plate (91) defining a through hole (91a) having a size and a shape corresponding to the pivotal operational range of the operational lever (9); and
a restricting pin (92) to be inserted into the through hole (91a) for restricting a movable range of the restricting plate (91);
wherein one of the restricting plate (91) and the restricting pin (92) is provided in the operational lever (9) to be pivotable in unison with the operational lever (9); and
wherein the other of the restricting plate (91) and the restricting pin (92) is provided in the machine body fixing portion.

## Patentansprüche

1. Aufsitzrasenmäher, umfassend:
eine Mähvorrichtung (4), die unter einer Karosserie (1) einer fahrenden Maschine angeordnet ist,
eine Überrollschutzstruktur (ROPS) (34), die aufrecht an einer hinteren Endsektion der Karosserie (1) der fahrenden Maschine steht,
einen Grassammelbehälter (50), der abnehmbar durch die ROPS (34) gestützt wird, und
mehrere Hydraulikzylinder (53, 54), um ein Anheben/Absenken und Ändern der Stellung des Grassammelbehälters (50) zu bewirken,
wobei sich ein Druckölzufuhr-/-ablasskanal von einer Druckölzufuhrquelle (8), die an der Karosserieseite der fahrenden Maschine montiert ist, zu den mehreren Hydraulikzylindern (53, 54) erstreckt,
einen Koppler, der dazu ausgestaltet ist, den Druckölzufuhr-/-ablasskanal zu verbinden/zu trennen, **dadurch gekennzeichnet, dass**
in dem Druckölzufuhr-/-ablasskanal ein elektromagnetisches Ventil (56) durch den Grassammelbehälter (50) gestützt wird, um den mehreren Hydraulikzylindern (53, 54) Drucköl zuzuführen und von ihnen abzulassen, und
der Koppler (88) zwischen der Druckölzufuhrquelle (8) und dem elektromagnetischen Ventil (56) vorgesehen ist.

2. Aufsitzrasenmäher nach Anspruch 1, wobei:
der Aufsitzrasenmäher ferner umfasst:
einen Mäherhubzylinder (43) zum Abstützen der Mähervorrichtung (4), um den Mäherhubzylinder (43) relativ zu der Karosserie (1) der fahrenden Maschine anzuheben oder abzusenken,
ein Mäherhub-Betätigungsventil (44) zum Zuführen/Ablassen von Drucköl zu/von dem Mäherhubzylinder (43), und
einen Betätigungshebel (9) zum Betätigen des Mäherhub-Betätigungsventils (44) und des elektromagnetischen Ventils (56),
wobei der Betätigungshebel (9) in zwei sich kreuzenden Betätigungsrichtungen betätigbar ist, und
wobei der Betätigungshebel (9) betätigbar mit dem Mäherhub-Betätigungsventil (44) und dem elektromagnetischen Ventil (56) derart gekoppelt ist, dass das Mäherhub-Betätigungsventil (44) als Reaktion auf eine Betätigung des Betätigungshebels (9) in einer Richtung der beiden Betätigungsrichtungen betätigt wird und das elektromagnetische Ventil (56) als Reaktion auf eine Betätigung des Betätigungshebels (9) in die andere Richtung der beiden Betätigungsrichtungen betätigt wird.

3. Aufsitzrasenmäher nach Anspruch 2, wobei:
ein Betätigungspositions-Begrenzungsmechanismus zwischen dem Betätigungshebel (9) und einer Maschinenkarosserie-Befestigungssektion vorgesehen ist, wo der Betätigungshebel (9) vorgesehen ist, um eine Schwenkbetätigungsrichtung und einen Schwenkbetätigungsbereich des Betätigungshebels (9) zu begrenzen, und
wobei der Betätigungspositions-Begrenzungsmechanismus beinhaltet:
eine Begrenzungsplatte (91), die ein Durchgangsloch (91a) definiert, das eine Größe und eine Form aufweist, die dem Schwenkbetätigungsbereich des Betätigungshebels (9) entsprechen, und
einen Begrenzungsstift (92), der in das Durchgangsloch (91a) eingeführt werden soll, um einen beweglichen Bereich der Begrenzungsplatte (91) zu begrenzen,
wobei eines von der Begrenzungsplatte (91) und dem Begrenzungsstift (92) in dem Betätigungshebel (9) vorgesehen ist, um in Einklang mit dem Betätigungshebel (9) schwenkbar zu sein, und
wobei das andere von der Begrenzungsplatte (91) und dem Begrenzungsstift (92) in der Maschinenkarosserie-Befestigungssektion vorgesehen ist.

## Revendications

1. Tondeuse autoportée comprenant :
un dispositif de tondeuse (4) disposé au-dessous d'un corps de machine mobile (1) ;
une structure de protection contre le renversement (ROPS) (34) se tenant debout au niveau d'une partie d'extrémité arrière du corps de machine mobile (1) ;
un contenant de collecte d'herbe (50) supporté de manière détachable par le ROPS (34) ; et
une pluralité de vérins hydrauliques (53, 54) pour effectuer un levage/une descente et un changement de position du contenant de collecte d'herbe (50) ;
dans laquelle un passage d'amenée/d'évacuation d'huile sous pression s'étend d'une source d'amenée d'huile sous pression (8) montée sur le côté de corps de machine mobile à la pluralité de vérins hydrauliques (53, 54) ; un coupleur étant configuré pour connecter/déconnecter le passage d'amenée/d'évacuation d'huile sous pression ; **caractérisée en ce que**, dans le passage d'amenée/d'évacuation d'huile sous pression, une électrovanne (56) est supportée par le contenant de collecte d'herbe (50) pour l'amenée/l'évacuation d'huile sous pression vers/de la pluralité de vérins hydrauliques (53, 54), et le coupleur (88) est prévu entre la source d'amenée d'huile sous pression (8) et l'électrovanne (56).

2. Tondeuse autoportée selon la revendication 1, dans laquelle :
la tondeuse autoportée comprend en outre :
un vérin de levage de tondeuse (43) pour supporter le dispositif de tondeuse (4) de manière à lever/descendre le vérin de levage de tondeuse (43) par rapport au corps de machine mobile (1) ;
une vanne fonctionnelle de levage de tondeuse (44) pour amener/évacuer l'huile sous pression au/du vérin de levage de tondeuse (43) ; et
un levier fonctionnel (9) pour faire fonctionner la vanne fonctionnelle de levage de tondeuse (44) et l'électrovanne (56) ;
dans laquelle le levier fonctionnel (9) peut fonctionner dans deux directions fonctionnelles se croisant ; et
dans laquelle le levier fonctionnel (9) est accouplé fonctionnellement à la vanne fonctionnelle de levage de tondeuse (44) et à l'électrovanne (56), de telle sorte que la vanne fonctionnelle de levage de tondeuse (44) fonctionne en réponse à un fonctionnement du levier fonctionnel (9) dans une direction des deux directions fonctionnelles, et l'électrovanne (56) fonctionne en réponse à un fonctionnement du levier fonctionnel (9) dans l'autre direction des deux directions fonctionnelles.

3. Tondeuse autoportée selon la revendication 2, dans laquelle :
un mécanisme de limitation de position fonctionnelle est prévu entre le levier fonctionnel (9) et une partie de fixation de corps de machine dans laquelle le levier fonctionnel (9) est prévu, pour limiter une direction fonctionnelle pivotante et une plage fonctionnelle pivotante du levier fonctionnel (9) ; et
dans laquelle le mécanisme de limitation de position fonctionnelle comporte :
une plaque de limitation (91) définissant un trou débouchant (91a) présentant une taille et une forme correspondant à la plage fonctionnelle pivotante du levier fonctionnel (9) ; et
une broche de limitation (92) à insérer à l'intérieur du trou débouchant (91a) pour limiter une plage mobile de la plaque de limitation (91) ;
dans laquelle une de la plaque de limitation (91) et de la broche de limitation (92) est prévue dans le levier fonctionnel (9) de manière à pouvoir pivoter à l'unisson avec le levier fonctionnel (9) ; et
dans laquelle l'autre de la plaque de limitation (91) et de la broche de limitation (92) est prévue dans la partie de fixation de corps de machine.
